# EUROPEAN PATENT APPLICATION

(11) **EP 1 986 405 A2**
(43) Date of publication of application: **29.10.2008**
(21) Application number: 08154083.3
(22) Date of filing: 04.04.2008
(51) Int. Cl.: H04M 1/2745

(54) **Electronic telephone directory and telephone directory management method**

(30) Priority: 25.04.2007 JP 2007115801
(71) Applicant: Fujitsu Limited, Kawasaki-shi, Kanagawa 211-8588 (JP)
(72) Inventor: Kuroki, Satoshi, Sawara-ku, Fukuoka-shi, Fukuoka 814-8588 (JP); Ishizuka, Masahiko, Kawasaki-shi, Kanagawa 211-8588 (JP); Kubo, Keijirou, Sawara-ku, Fukuoka-shi, Fukuoka 814-8588 (JP)
(74) Representative: Stebbing, Timothy Charles

(57) **Abstract**

An electronic telephone directory provided in a cell phone includes a telephone directory storage for storing entry data of an entry registered in the electronic telephone directory. The entry data includes an entry identifier for identifying the entry, an entry name, a telephone number, and link identifiers of link destinations. The electronic telephone directory also includes tree display means for displaying the entry name included in entry data of each entry registered in the telephone directory storage, associated with the entry names included in entry data of the link destinations in a tree form.

## Description

The present invention relates to an electronic telephone directory, particularly, to an electronic telephone directory provided in a cell phone.

Each piece of data registered in the electronic telephone directory of a cell phone is independently managed without association. Each of the independent data has been classified by allocating arbitrary attributes, such as a group, in order to facilitate specification of data.

In recent years, capacity of the recording medium built in a cell phone has been enlarged, so that a large amount of data can be registered in an electronic telephone directory. Accordingly, there is a limit to specify data by classification based on arbitrary attributes. Consequently, the user independently makes self-help efforts so as not to forget the feature of the entry data, such as supplementing required data for the electronic telephone directory with additional data, like a memo, upon registration in the electronic telephone directory.

Note that Japanese Laid-open Patent Publication No. 2003-324516 discloses an apparatus displaying words indicating attributes as words serving as candidates for the names of the opposite sides from upper attributes to lower attributes at each hierarchy and registering the words selected by the operator as the names of the opposite sides for the electronic telephone directory.

Further, Japanese Laid-open Patent Publication No. 11-136338 discloses a mobile communication terminal equipment in which one of a plurality of telephone numbers corresponding to each name in an electronic telephone directory is set to be a representative number, and in the case that the name is selected and designated as a dial destination, the representative telephone number is read and dialed.

In the conventional techniques, there are problems as described below. First, it is difficult to select specific data from a large amount of data registered in an electronic telephone directory. Further, operation for registering additional data such as a memo for facilitating specification of entry data is troublesome. Further, even when additional data is registered, as the display screen of the cell phone is limited in size, there is a problem in that all of the registered additional data for specifying the feature of the data can not be displayed. Further, there is a problem in that a lot of unnecessary data is accumulated in the electronic telephone directory as long as no deletion operation is voluntary performed and this further makes it difficult to specify entry data.

The present invention is made in the light of the problems described above. Embodiments of the present invention may provide an electronic telephone directory of a cell phone which makes it possible to easily specify entry data of the electronic telephone directory without registering additional data.

According to a first aspect of the present invention, there is provided an electronic telephone directory which includes: a data storage which stores entry data of an entry which is registered in the electronic telephone directory, wherein the entry data includes an entry identifier which identifies the entry, an entry name, a telephone number, and a link identifier which is indicative of an entry identifier which is included in entry data of another entry which is registered in the electronic telephone directory, and a display controller which displays a first entry name which is included in first entry data of a first entry which is registered in the electronic telephone directory and a second entry name which is included in second entry data of a second entry which is identified by a link identifier which is included in the first entry data, wherein the second entry name is displayed in association with the first entry name.

The entry data of the electronic telephone directory may further include a flag which indicates whether to display the second entry name, and the display controller of the electronic telephone directory may display the second entry name only when the flag indicates to display the second entry name.

The entry data of the electronic telephone directory may include a plurality of link identifiers.

The entry data of the electronic telephone directory may further include number of incoming or outgoing telephone calls during a predetermined time period and the electronic telephone directory may further include: a selector which determines a candidate entry to be deleted from among entries which are registered in the electronic telephone directory on the basis of number of link identifiers and the number of incoming or outgoing telephone calls which are included in entry data of each entry, and a deleter which deletes entry data of the candidate entry from the data storage.

The entry data of the electronic telephone directory may further include number of incoming or outgoing telephone calls during a predetermined time period and the electronic telephone directory may further include: a selector which determines a candidate entry to be deleted from among entries which are registered in the electronic telephone directory on the basis of number of link identifiers and the number of incoming or outgoing telephone calls which are included in entry data of each entry, wherein the display controller displays entry names which are included in entry data of entries except for the candidate entry.

The entry data of the electronic telephone directory may further include a mail address and number of incoming or outgoing mails during a predetermined time period, and the selector of the electronic telephone directory may determine the candidate entry on the basis of number of link identifiers, the number of incoming or outgoing telephone calls, and the number of incoming or outgoing mails which are included in entry data of each entry.

The display controller of the electronic telephone directory may allow scrolling of display image.

The display controller of the electronic telephone directory may allow scrolling of display image while freezing a part of the display image.
According to a second aspect of the present invention, there is provided a telephone directory management method which is executed by an electronic telephone directory which includes a data storage which stores entry data of an entry which is registered in the electronic telephone directory. The telephone directory management method includes the steps of: storing entry data which includes an entry identifier which identifies an entry, an entry name, a telephone number, and a link identifier which is indicative of an entry identifier which is included in entry data of another entry which is registered in the electronic telephone directory, and displaying a first entry name which is included in first entry data of a first entry which is registered in the electronic telephone directory and a second entry name which is included in second entry data of a second entry which is identified by a link identifier which is included in the first entry data, wherein the second entry name is displayed in association with the first entry name.

Reference is made, by way of example only, to the accompanying drawings in which:
Fig. 1 is a block diagram illustrating a hardware configuration of an electronic telephone directory of a cell phone according to an embodiment of the present invention;
Fig. 2 is a diagram illustrating a data structure of entry data of the electronic telephone directory stored in a telephone directory nonvolatile memory according to an embodiment of the present invention;
Fig. 3 is a diagram illustrating a process sequence of a registration process of entry data to an electronic telephone directory according to an embodiment of the present invention;
Fig. 4 is a diagram illustrating a process sequence of a registration process of entry data from an incoming/outgoing call history to an electronic telephone directory according to an embodiment of the present invention;
Fig. 5 is a diagram illustrating a process sequence of a registration process of entry data from a mail to an electronic telephone directory according to an embodiment of the present invention;
Fig. 6 is a diagram illustrating a process sequence of a correction process of an entry data stored in the electronic telephone directory according to an embodiment of the present invention;
Fig. 7 is a diagram illustrating a flow chart of a tree display process performed by an electronic telephone directory according to an embodiment of the present invention;
Fig. 8 is a diagram illustrating a flow chart of an expansion display process performed by an electronic telephone directory according to an embodiment of the present invention;
Fig. 9 is a diagram illustrating a flow chart of a link display process performed by an electronic telephone directory according to an embodiment of the present invention;
Figs. 10A to 10E are diagrams each illustrating content (on the left) of a telephone directory nonvolatile memory and a corresponding screen image (on the right) of the electronic telephone directory according to an embodiment of the present invention;
Figs. 11A to 11C are diagrams for illustrating frozen pane scrolling of a tree display of content registered in an electronic telephone directory according to an embodiment of the present invention;
Fig. 12 is a diagram illustrating a flow chart of a deletion process performed by an electronic telephone directory according to an embodiment of the present invention; and
Fig. 13 is a diagram for illustrating an example of conversion rules according to an embodiment of the present invention.

Hereinafter, an embodiment of the present invention will be described with reference to the accompanying drawings.

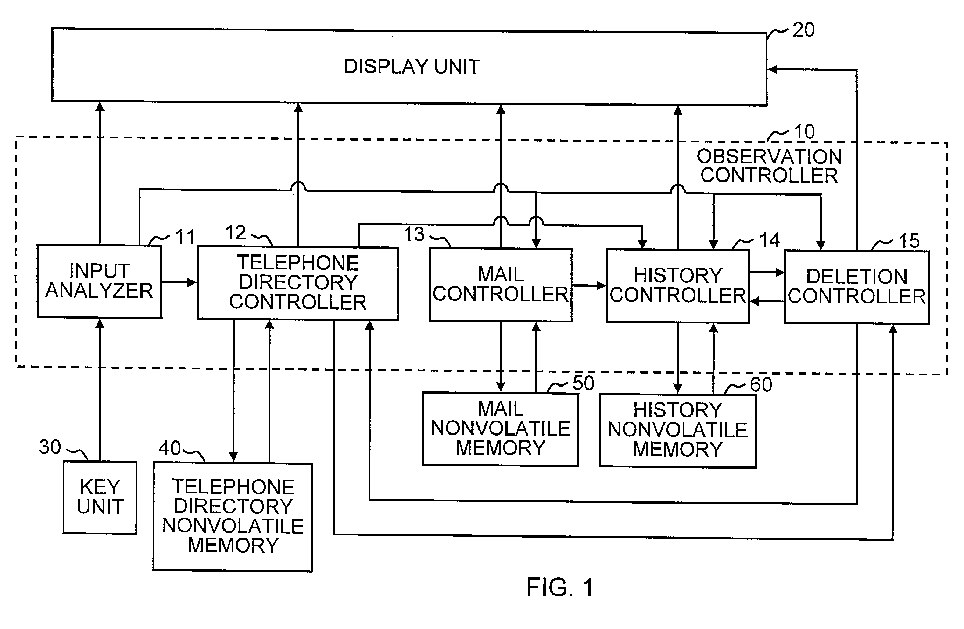

Fig. 1 is a block diagram illustrating a hardware configuration of an electronic telephone directory of a cell phone according to an embodiment of the present invention. In Fig. 1, the electronic telephone directory of a cell phone includes an observation controller 10, a display unit 20, a key unit 30, a telephone directory nonvolatile memory 40, a mail nonvolatile memory 50, and a history nonvolatile memory 60. The observation controller 10 includes an input analyzer 11, a telephone directory controller 12, and a mail controller 13, a history controller 14, and a deletion controller 15.

The input analyzer 11 analyzes an input signal received via the key unit 30 and displays input data on the display unit 20. The input analyzer 11 also supplies the input data to each of the telephone directory controller 12, the mail controller 13, the history controller 14, and the deletion controller 15.

On receiving the input data, the telephone directory controller 12 reads entry data stored in the telephone directory nonvolatile memory 40 and displays it on the display unit 20. The telephone directory controller 12 also stores entry data in the telephone directory nonvolatile memory 40 or updates entry data stored in the telephone directory nonvolatile memory 40.

On receiving the input data, the mail controller 13 transmits mail data stored in the mail nonvolatile memory 50 or writes received mail data in the mail nonvolatile memory 50. The mail controller 13 also displays mail data on the display unit 20.

The history controller 14 stores incoming/outgoing call/mail history data in the history nonvolatile memory 60 and displays the incoming/outgoing call/mail history data stored in the history nonvolatile memory 60 on the display unit 20. The history controller 14 also informs the incoming/outgoing call/mail history data to the deletion controller 15.

The deletion controller 15 selects an entry to be deleted from the electronic telephone directory on the basis of number of entries registered in the electronic telephone directory and the incoming/outgoing call/mail history data stored in the telephone directory nonvolatile memory 40 and displays an entry number of the selected entry on the display unit 20. Further, the deletion controller 15 deletes entry data of the selected entry from the telephone directory nonvolatile memory 40.

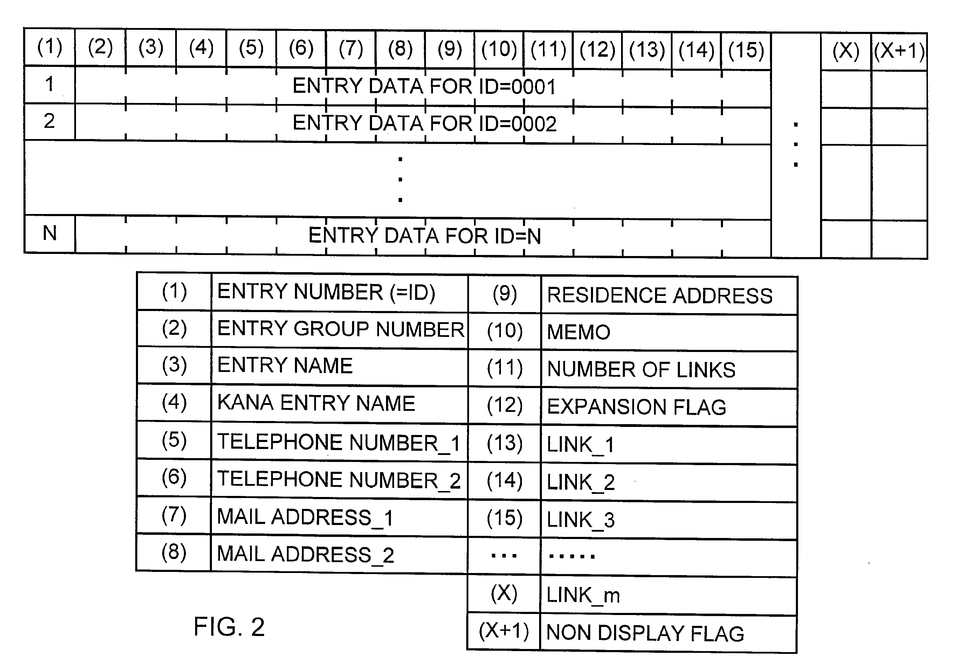

Fig. 2 is a diagram illustrating a data structure of entry data of an electronic telephone directory stored in a telephone directory nonvolatile memory according to an embodiment of the present invention. As shown in Fig. 2, the electronic telephone directory includes entry data each having an ENTRY NUMBER as an identifier. Each entry includes, in addition to the ENTRY NUMBER, ENTRY GROUP NUMBER, ENTRY NAME, KANA ENTRY NAME, TELEPHONE NUMBER_1, TELEPHONE NUMBER_2, MAIL ADDRESS_1, MAIL ADDRESS_2, RESIDENCE ADDRESS, MEMO, NUMBER OF LINKS, EXPANSION FLAG, LINK_1, LINK_2, LINK_3, ···, LINK_m, NON DISPLAY FLAG.

For example, serial numbers are used for the ENTRY NUMBER (ENTRY ID). The ENTRY GROUP NUMBER is a number for a group of entry numbers. A name of a person, a company, or the like is registered in the ENTRY NAME. Kana representation of the entry name is registered in the KANA ENTRY NAME. A telephone number of a fixed telephone or a mobile telephone corresponding to the entry name is registered in the TELEPHONE NUMBER_1 and the TELEPHONE NUMBER_2. A mail address corresponding to the entry name is registered in the MAIL ADDRESS_1 and the MAIL ADDRESS_2. A residence address corresponding to the entry name is registered in the RESIDENCE ADDRESS and a memo relating to the entry name is registered in the MEMO.

Entry numbers to be associated with the entry name are registered in the LINK_1, LINK_2, LINK_3, ···, LINK_m, and number of links associated with the entry name is registered in the NUMBER OF LINKS. "On" of the EXPANSION FLAG indicates to display expansion of the links and "off' indicates not to display. "Off" of the NON DISPLAY FLAG indicates to display the entry data on the display screen and "on" indicates not to display.

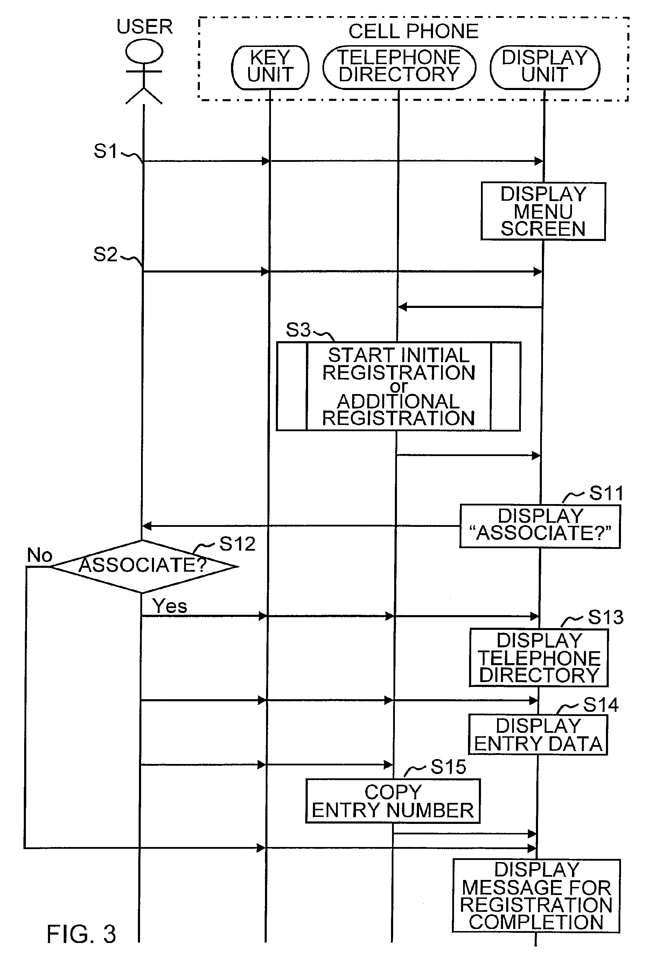

Fig. 3 is a diagram illustrating a process sequence of a registration process of entry data to an electronic telephone directory according to an embodiment of the present invention. The user pushes a menu button of the cell phone in step S1, and selects "initial registration" or "additional registration" on a menu screen in step S2. In step S3, the telephone directory controller 12 starts an initial registration process or an additional registration process in response to the selection.

Thereafter, the telephone directory controller 12 performs an association sequence (step S11 to step S15). First, the telephone directory controller 12 displays a massage of "perform association?" on the display unit 20 in step S11.

In response to the massage, the user decides whether to perform association in step S12. When performing association, the user pushes a selection button for performing "association" and the telephone directory controller 12 displays a main screen of the electronic telephone directory in step S13. The main screen includes a list of entry names. The user selects an entry name to be associated from the list and the telephone directory controller 12 displays some of entry data corresponding to the selected entry name, such as ENTRY NUMBER, ENTRY GROUP NUMBER, ENTRY NAME, KANA ENTRY NAME, TELEPHONE NUMBER_1, TELEPHONE NUMBER_2, MAIL ADDRESS_1, MAIL ADDRESS_2, RESIDENCE ADDRESS, MEMO, NUMBER OF LINKS, EXPANSION FLAG, LINK_1 to LINK_m), in step S14.

The user pushes a decision button and the telephone directory controller 12 copies the ENTRY NUMBER corresponding to the selected entry name in step S15. The copied entry number is registered to any of the LINK_1 to LINK_m of the entry initially registered or additionally registered in the above step S3.

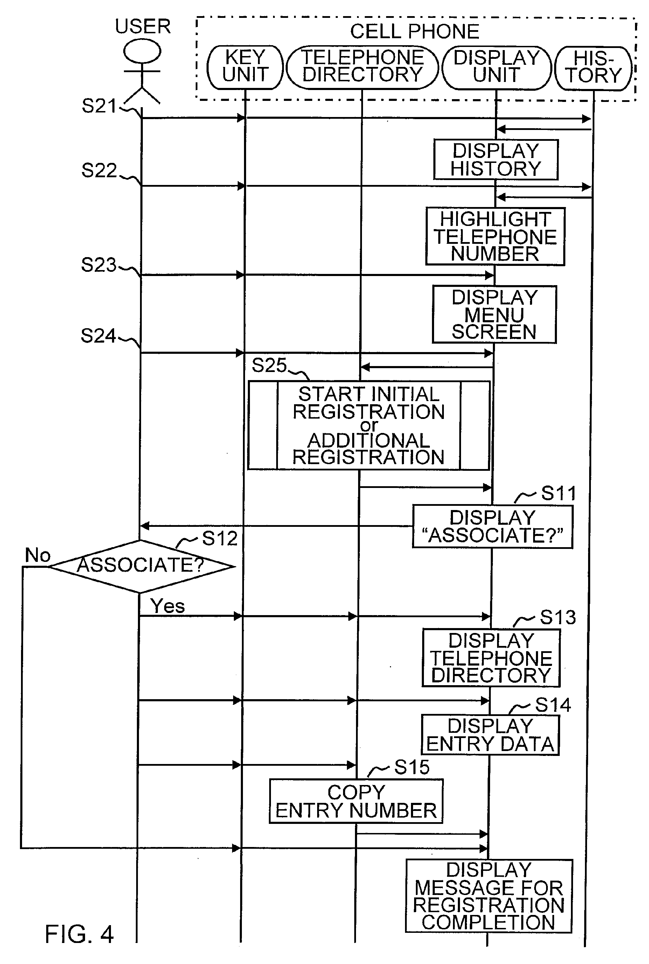

Fig. 4 is a diagram illustrating a process sequence of a registration process of entry data from an incoming/outgoing call history to an electronic telephone directory according to an embodiment of the present invention. The user instructs to display content of an incoming/outgoing call history in step S21 and selects a telephone number from the displayed content of the incoming/outgoing call history in step S22. The user pushes the menu button of the cell phone in step S23, and selects "initial registration" or "additional registration" on a menu screen in step S24. In step S25, the telephone directory controller 12 starts the initial registration process or the additional registration process in response to the selection.

Thereafter, the telephone directory controller 12 performs the association sequence. First, the telephone directory controller 12 displays the massage of "perform association?" on the display unit 20 in step S11.

In response to the massage, the user decides whether to perform association in step S12. When performing association, the user pushes the selection button for performing "association" and the telephone directory controller 12 displays the main screen of the electronic telephone directory in step S13. The user selects an entry name to be associated from the list and the telephone directory controller 12 displays some of entry data corresponding to the selected entry name, such as ENTRY NUMBER, ENTRY GROUP NUMBER, ENTRY NAME, KANA ENTRY NAME, TELEPHONE NUMBER_1, TELEPHONE NUMBER_2, MAIL ADDRESS_1, MAIL ADDRESS_2, RESIDENCE ADDRESS, MEMO, NUMBER OF LINKS, EXPANSION FLAG, LINK_1 to LINK_m), in step S14.

The user pushes the decision button and the telephone directory controller 12 copies the ENTRY NUMBER corresponding to the selected entry name in step S15. The copied entry number is registered to any of the LINK_1 to LINK_m of the entry initially registered or additionally registered in the above step S25.

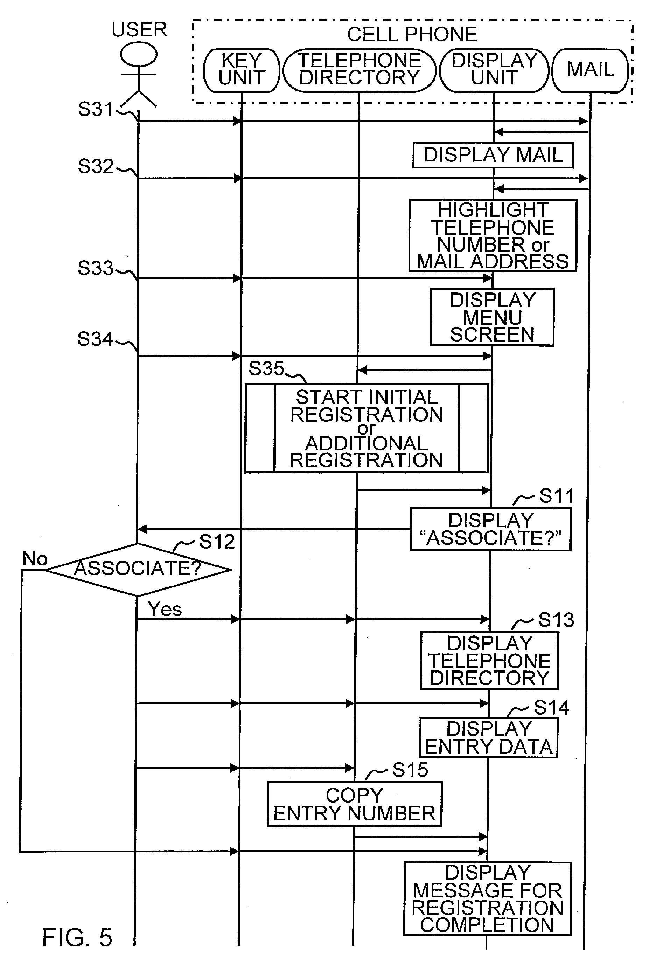

Fig. 5 is a diagram illustrating a process sequence of a registration process of entry data from a mail to an electronic telephone directory according to an embodiment of the present invention. The user instructs to display content of a mail in step S31 and selects a telephone number or a mail address from the displayed content of the mail in step S32. The user pushes the menu button of the cell phone in step S33, and selects "initial registration" or "additional registration" on a menu screen in step S34. In step S35, the telephone directory controller 12 starts the initial registration process or the additional registration process in response to the selection.

Thereafter, the telephone directory controller 12 performs the association sequence. First, the telephone directory controller 12 displays the massage of "perform association?" on the display unit 20 in step S11.

In response to the massage, the user decides whether to perform association in step S12. When performing association, the user pushes the selection button for performing "association" and the telephone directory controller 12 displays the main screen of the electronic telephone directory in step S13. The user selects an entry name to be associated from the list and the telephone directory controller 12 displays some of entry data corresponding to the selected entry name, such as ENTRY NUMBER, ENTRY GROUP NUMBER, ENTRY NAME, KANA ENTRY NAME, TELEPHONE NUMBER_1, TELEPHONE NUMBER_2, MAIL ADDRESS_1, MAIL ADDRESS_2, RESIDENCE ADDRESS, MEMO, NUMBER OF LINKS, EXPANSION FLAG, LINK_1 to LINK_m), in step S14.

The user pushes the decision button and the telephone directory controller 12 copies the ENTRY NUMBER corresponding to the selected entry name in step S15. The copied entry number is registered to any of the LINK_1 to LINK_m of the entry initially registered or additionally registered in the above step S35.

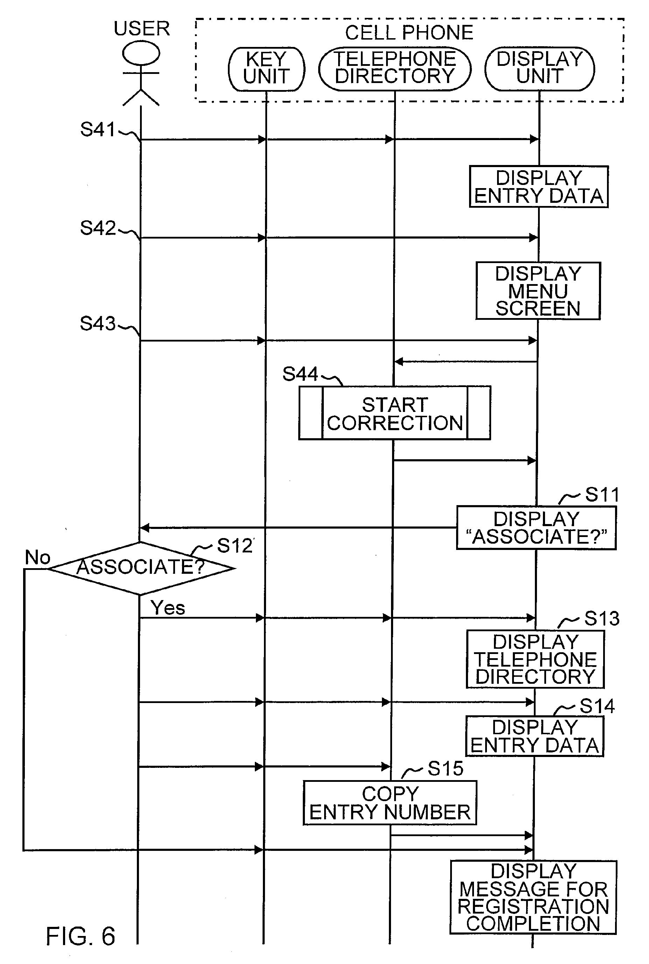

Fig. 6 is a diagram illustrating a process sequence of a correction process of an entry data stored in the electronic telephone directory according to an embodiment of the present invention. The user instructs to display entry data of a specified entry number, which is stored in the electronic telephone directory (telephone directory nonvolatile memory 40) and to be corrected, in step S41. The user pushes the menu button of the cell phone in step S42, and selects "correction" on the menu screen in step S43. In step S44, the telephone directory controller 12 starts a correction process in response to the instruction.

Thereafter, the telephone directory controller 12 performs the association sequence. First, the telephone directory controller 12 displays the massage of "perform association?" on the display unit 20 in step S11.

In response to the massage, the user decides whether to perform association in step S12. When performing association, the user pushes the selection button for performing "association" and the telephone directory controller 12 displays the main screen of the electronic telephone directory in step S13. The user selects an entry name to be associated from the list and the telephone directory controller 12 displays some of entry data corresponding to the selected entry name, such as ENTRY NUMBER, ENTRY GROUP NUMBER, ENTRY NAME, KANA ENTRY NAME, TELEPHONE NUMBER_1, TELEPHONE NUMBER_2, MAIL ADDRESS_1, MAIL ADDRESS_2, RESIDENCE ADDRESS, MEMO, NUMBER OF LINKS, EXPANSION FLAG, LINK_1 to LINK_m), in step S14.

The user pushes the decision button and the telephone directory controller 12 copies the ENTRY NUMBER corresponding to the selected entry name in step S15. The copied entry number is registered to any of the LINK_1 to LINK_m of the entry initially registered or additionally registered in the above step S44.

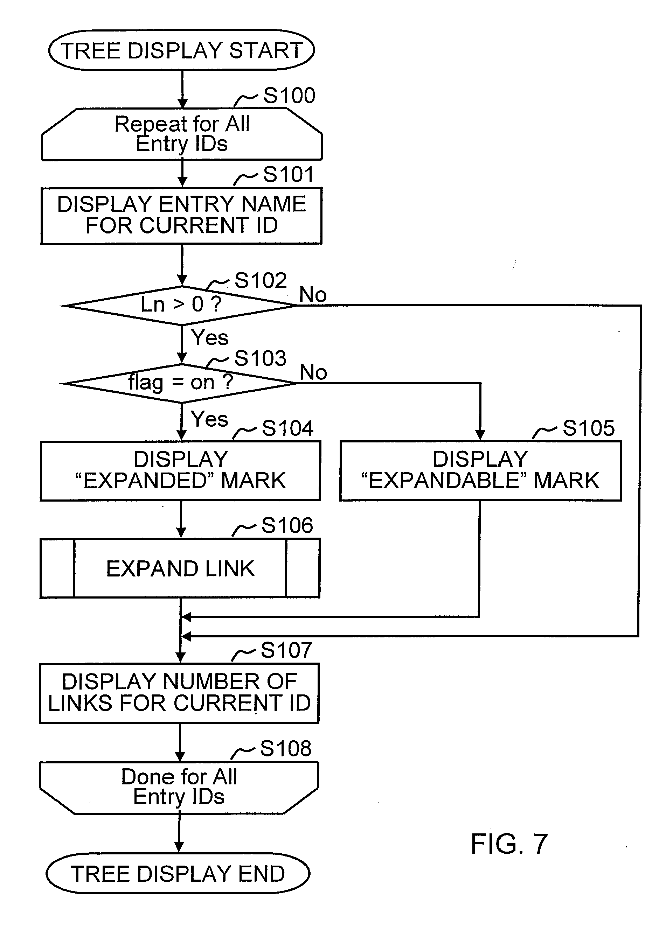

Fig. 7 is a diagram illustrating a flow chart of a tree display process performed by an electronic telephone directory according to an embodiment of the present invention. In Fig. 7, the steps S100 to S108 are repeated for every ENTRY NUMBER (ENTRY ID). In step S101, the telephone directory controller 12 displays an ENTRY NAME corresponding to an ENTRY NUMBER (current ENTRY ID). In step S102, the telephone directory controller 12 determines whether the NUMBER OF LINKS (referred to as "Ln" in Fig. 7) corresponding to the ENTRY NUMBER is greater than 0. When Ln is greater than 0 (Yes in step S102), in step S103, the telephone directory controller 12 determines whether the EXPANSION FLAG (referred to as "flag" in Fig. 7) is "on".

When the EXPANSION FLAG is "on" (Yes in step S103), in step S104, the telephone directory controller 12 displays an "expanded" mark (that is, "-"), and in step S106, an expansion display module of the telephone directory controller 12 performs a link expansion process. In step S107, the telephone directory controller 12 displays the NUMBER OF LINKS (Ln) corresponding to the ENTRY NUMBER.

When the EXPANSION FLAG is "off" (No in step S103), in step S105, the telephone directory controller 12 displays an "expandable" mark (that is, "+") then the process proceeds to step S107 and the NUMBER OF LINKS (Ln) corresponding to the ENTRY NUMBER is displayed. Further, when Ln is less than or equal to 0 (No in step S102), the process directly proceeds to step S107 and the NUMBER OF LINKS (Ln) corresponding to the ENTRY NUMBER is displayed.

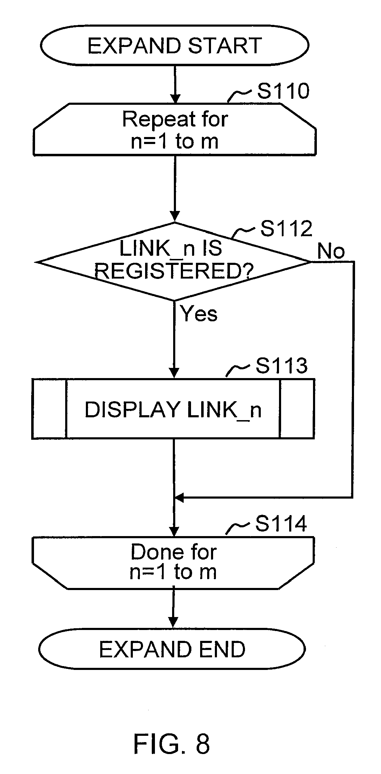

Fig. 8 is a diagram illustrating a flow chart of an expansion display process performed by an electronic telephone directory according to an embodiment of the present invention. In Fig. 8, steps S110 to S114 are repeated for every link destination (LINK_1 to LINK_m). In step S112, the expansion display module of the telephone directory controller 12 determines whether a LINK_n ("n" is 1 to m) is registered. Only when the LINK_n is registered (Yes in step S112), in step S113, a link display module of the telephone directory controller 12 performs a link display process.

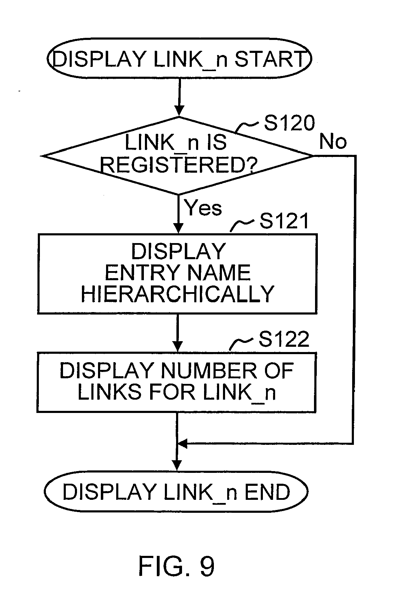

Fig. 9 is a diagram illustrating a flow chart of a link display process performed by an electronic telephone directory according to an embodiment of the present invention. In step S120 of Fig. 9, the telephone directory controller 12 determines whether LINK_n is registered. Only when the LINK_n is registered (Yes in step S120), in step S121, the link display module of the telephone directory controller 12 hierarchically displays an ENTRY NAME corresponding to an ENTRY NUMBER of the link destination, and in step S122, the link display module displays the NUMBER OF LINKS corresponding to the ENTRY NUMBER of the link destination.

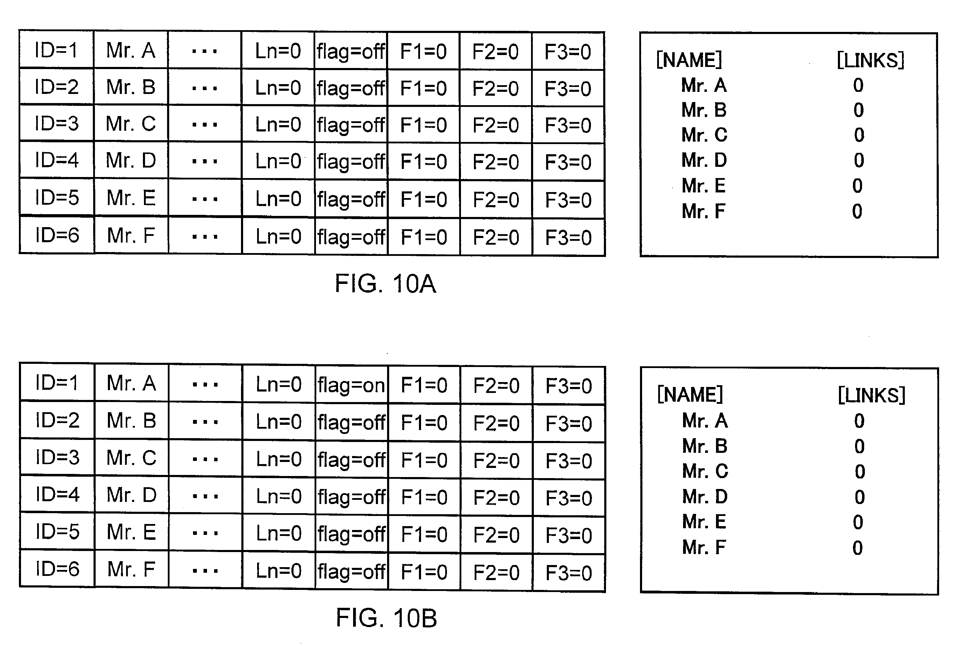

Figs. 10A to 10E are diagrams each illustrating content (on the left) of a telephone directory nonvolatile memory and a corresponding screen image (on the right) of the electronic telephone directory according to an embodiment of the present invention.

In Fig. 10A, NUMBER OF LINKS (Ln) is "0" and EXPANSION FLAG (flag) is "off" as for all entries having ENTRY NUMBER (ID=1 to 6). In this case, ENTRY NAME and NUMBER OF LINKS corresponding to each ENTRY NUMBER are displayed and no tree display is performed.

In Fig. 10B, NUMBER OF LINKS (Ln) is "0" and EXPANSION FLAG (flag) is "on" as for an entry having ENTRY NUMBER (ID=1), while NUMBER OF LINKS (Ln) is "0" and EXPANSION FLAG (flag) is "off" as for the other entries having ENTRY NUMBER (ID=2 to 6). As for the entry having ENTRY NUMBER (ID=1), however the EXPANSION FLAG (flag) is "on", the NUMBER OF LINKS (Ln) is "0". In this case, ENTRY NAME and NUMBER OF LINKS corresponding to each ENTRY NUMBER are displayed and no tree display is performed.

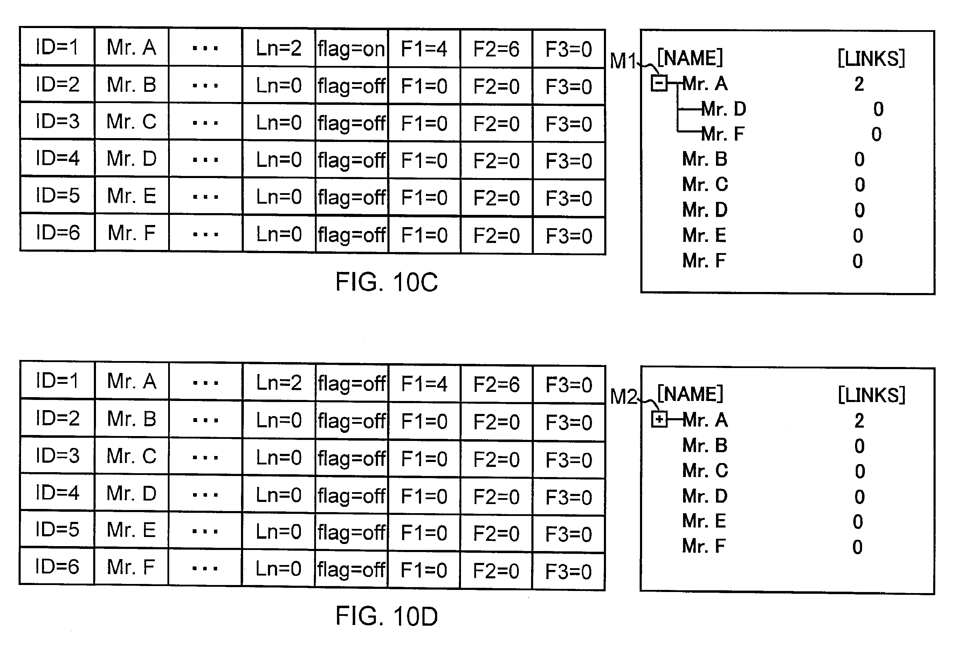

In Fig. 10C, NUMBER OF LINKS (Ln) is "2", EXPANSION FLAG (flag) is "on", the LINK_1 (F1) is "4", and LINK_2 (F2) is "6" as for an entry having ENTRY NUMBER (ID=1). Accordingly, an "expanded" mark M1 (that is, "-") is attached to ENTRY NAME "Mr. A" corresponding to the entry having ENTRY NUMBER (ID=1), and a tree of ENTRY NAME "Mr. D" and NUMBER OF LINKS "0" corresponding to an entry having ENTRY NUMBER (ID=4) indicated by the LINK_1 and a tree of ENTRY NAME "Mr. F" and NUMBER OF LINKS "0" corresponding to an entry having ENTRY NUMBER (ID=6) indicated by the LINK_2 are displayed. On the other hand, NUMBER OF LINKS (Ln) is "0" and EXPANSION FLAG (flag) is "off" as for entries having ENTRY NUMBER (ID=2 to 6), so that ENTRY NAME and NUMBER OF LINKS corresponding to each ENTRY NUMBER (ID=2 to 6) are displayed and no tree display is performed.

Note that, a click on the "expanded" mark M1 causes the EXPANSION FLAG (flag) corresponding to the ENTRY NUMBER (ID=1) to change into "off", the "expanded" mark M1 to change into an "expandable" mark M2, and the tree display of the LINK_1 and LINK_2 to collapse.

In Fig. 10D, NUMBER OF LINKS (Ln) is "2" but EXPANSION FLAG (flag) is "off" as for an entry having ENTRY NUMBER (ID=1). In this case, the "expandable" mark M2 (that is, "+") is attached to ENTRY NAME "Mr. A" corresponding to the entry having ENTRY NUMBER (ID=1), and no tree display is performed. On the other hand, NUMBER OF LINKS (Ln) is "0" and EXPANSION FLAG (flag) is "off" as for entries having ENTRY NUMBER (ID=2 to 6), so that ENTRY NAME and NUMBER OF LINKS corresponding to each ENTRY NUMBER (ID=2 to 6) are displayed and no tree display is performed.

Note that, a click on the "expandable" mark M2 causes the EXPANSION FLAG (flag) corresponding to the ENTRY NUMBER (ID=1) to change into "on", the "expandable" mark M2 to change into an "expanded" mark M1, and the tree display of the LINK_1 and LINK_2 to expand.

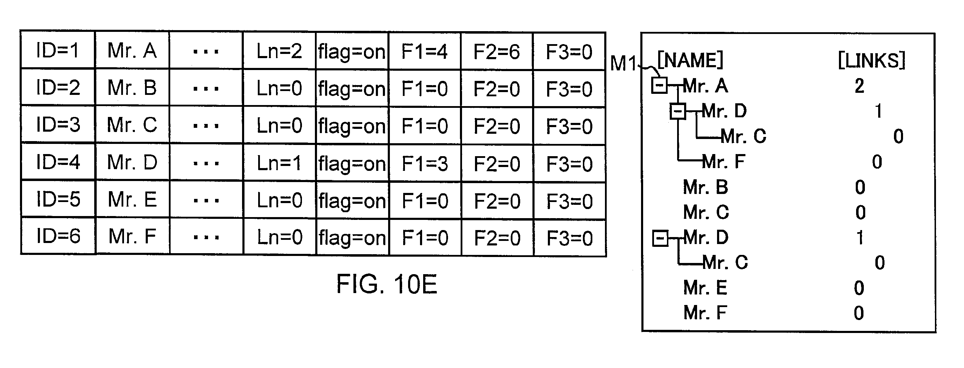

In Fig. 10E, NUMBER OF LINKS (Ln) is "2", EXPANSION FLAG (flag) is "on", the LINK_1 (F1) is "4", and LINK_2 (F2) is "6" as for an entry having ENTRY NUMBER (ID=1). Accordingly, an "expanded" mark M1 (that is, "-") is attached to ENTRY NAME "Mr. A" corresponding to the entry having ENTRY NUMBER (ID=1), and a tree of ENTRY NAME "Mr. D" and NUMBER OF LINKS "1" corresponding to an entry having ENTRY NUMBER (ID=4) indicated by the LINK_1 and a tree of ENTRY NAME "Mr. F" and NUMBER OF LINKS "0" corresponding to an entry having ENTRY NUMBER (ID=6) indicated by the LINK_2 are displayed.

Further, NUMBER OF LINKS (Ln) is "1", EXPANSION FLAG (flag) is "on", and the LINK_1 (F1) is "3" as for the entry having ENTRY NUMBER (ID=4). Accordingly, the "expanded" mark M1 (that is, "-") is attached to ENTRY NAME "Mr. D" corresponding to the entry having ENTRY NUMBER (ID=4), and a tree of ENTRY NAME "Mr. C" and NUMBER OF LINKS "0" corresponding to an entry having ENTRY NUMBER (ID=3) indicated by the LINK_1 is displayed.

As for entries having ENTRY NUMBER (ID=2, 3, 5, 6), however the EXPANSION FLAG (flag) is "on", the NUMBER OF LINKS (Ln) is "0". Accordingly, ENTRY NAME and NUMBER OF LINKS corresponding to each ENTRY NUMBER are displayed and no tree display is performed.

Scrolling of tree display is performed when a display screen is unable to afford to display a whole content registered in the electronic telephone directory at a time. Tree display of the content registered in the electronic telephone directory can be scrolled up and down in response to an instruction of scrolling up and down input via the key unit 30.

As described above, by performing the association sequence, the entry numbers registered in the electronic telephone directory can be associated, and the association of the entry numbers can be recognized at a look by the tree display of the associated entry numbers. Thus, entry data of the electronic telephone directory can be easily specified without registering additional data. Further, by performing scroll display of the electronic telephone directory, the content of all of the entries can be displayed on the limited display screen of the cell phone, and the display screen of the cell phone can be effectively utilized.

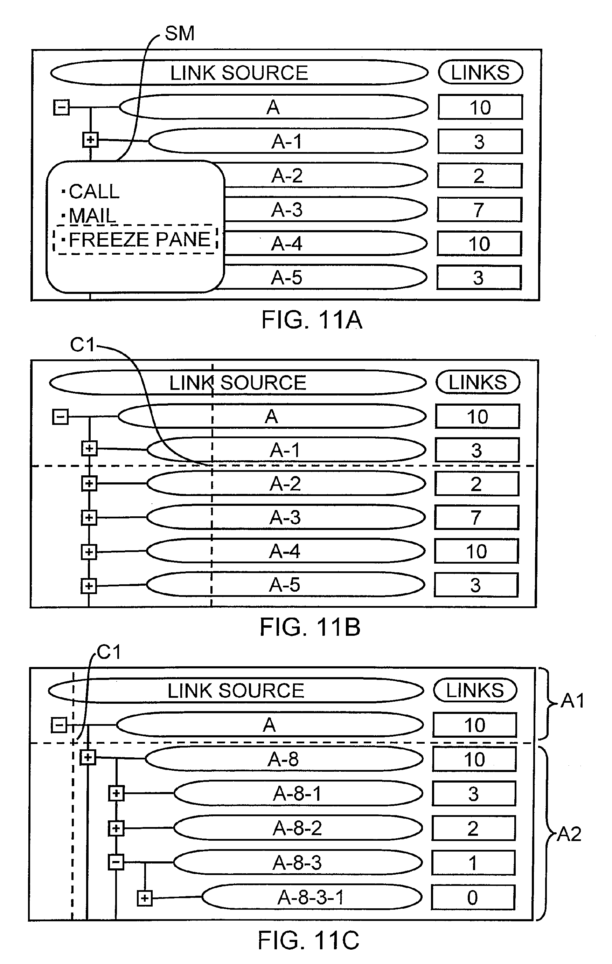

Figs. 11A to 11C are diagrams for illustrating frozen pane scrolling of a tree display of content registered in an electronic telephone directory according to an embodiment of the present invention. On a display screen shown in Fig. 11A, a user operates the key unit 30 to display a sub menu SM and clicks "freeze pane" in the sub menu.

Herewith, as shown in Fig. 11B, a freezing cursor C1 represented by crossing dashed lines is displayed on the display screen. The user moves the freezing cursor C1 to a desired point as shown in Fig. 11C and operates an input button of the key unit 30 to split the display screen. Accordingly, only an area A2 positioned at the right lower side of the freezing cursor C1 can be scrolled and an area A1 positioned at the right upper side of the freezing cursor C1 freezes and is prevented to be scrolled. Thus, the user can compare display content in the area A2 with display content in the area A1 by scrolling the area A2.

A user instructs setting and cancel of automatic deletion to the deletion controller 15 via the key unit 30. The deletion controller 15 performs deletion of entry data registered in the electronic telephone directory at predetermined interval (for example, several days to several months).

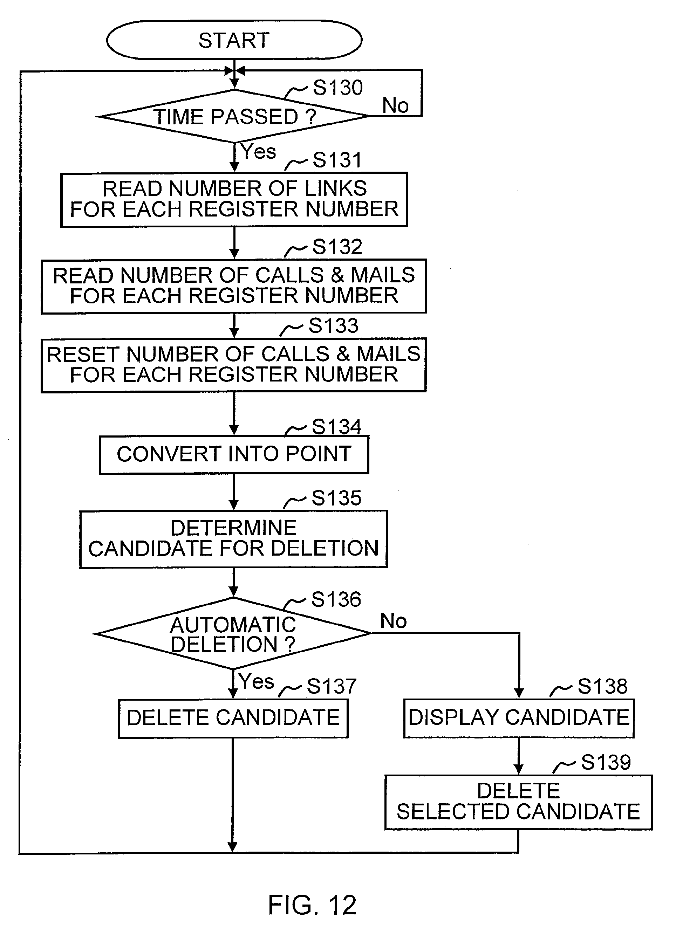

Fig. 12 is a diagram illustrating a flow chart of a deletion process performed by an electronic telephone directory according to an embodiment of the present invention. As shown in Fig. 12, in step S130, the deletion controller 15 determines whether a predetermined amount of time has passed. When the predetermined amount of time has passed (Yes in step S130), in step S131, the deletion controller 15 receives NUMBER OF LINKS corresponding to every ENTRY NUMBER from the telephone directory controller 12. In step S132, the deletion controller 15 receives number of incoming/outgoing calls and number of incoming/outgoing mails for every ENTRY NUMBER from the history controller 14, and in step S133, the deletion controller 15 requests the history controller 14 to reset number of incoming/outgoing calls and number of incoming/outgoing mails for every ENTRY NUMBER stored in the history nonvolatile memory 60 to zero.

In step S134, the deletion controller 15 converts each number of incoming/outgoing calls and each number of incoming/outgoing mails for every ENTRY NUMBER into a point.

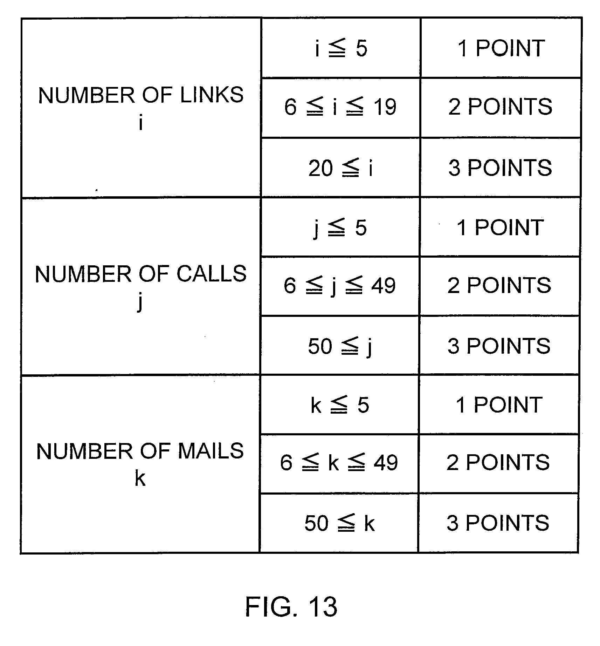

Fig. 13 is a diagram for illustrating an example of conversion rules according to an embodiment of the present invention. As shown in Fig. 13, for example, number of links which is less than or equal to 5 is converted into 1 point. Number of links which is more than or equal to 6 and less than or equal to 19 is converted into 2 points. Number of links which is more than or equal to 20 is converted into 3 points. Number of incoming/outgoing calls which is less than or equal to 5 is converted into 1 point. Number of incoming/outgoing calls which is more than or equal to 6 and less than or equal to 49 is converted into 2 points. Number of incoming/outgoing calls which is more than or equal to 50 is converted into 3 points. Number of incoming/outgoing mails which is less than or equal to 5 is converted into 1 point. Number of incoming/outgoing mails which is more than or equal to 6 and less than or equal to 49 is converted into 2 points. Number of incoming/outgoing mails which is more than or equal to 50 is converted into 3 points.

In step S 135, the deletion controller 15 sums up a point from number of links, a point from number of incoming/outgoing calls, and a point from number of incoming/outgoing mails for every ENTRY NUMBER and sorts the entry numbers in ascending order of total point thereof. The deletion controller 15 selects, as candidates for deletion, 10% of entries having fewer total points among from total number of the entries registered in the electronic telephone directory.

Note that, in step S135, the deletion controller 15 may select entries having total points less than or equal to a threshold value (for example, 3).

In step S136, the deletion controller 15 determines whether automatic deletion is set. When the automatic deletion is set (Yes in step S136), in step S137, the deletion controller 15 deletes entry data of the candidates for deletion from the telephone directory nonvolatile memory 40.

On the other hand, when the automatic deletion is not set(No in step S136), in step S138, the deletion controller 15 displays the ENTRY NUMBER and the ENTRY NAME of the candidate for deletion on the display unit 20 to prompt the user to select entries to be deleted from the electronic telephone directory. When the whole or a part of the displayed candidates is selected by the user, in step S139, the deletion controller 15 deletes entry data of the selected entries from the telephone directory nonvolatile memory 40.

Thus, the entry data registered in the electronic telephone directory is automatically deleted, so that maintenance of entry data registered in the electronic telephone directory becomes easy. Herewith, the specification of entry data registered in the electronic telephone directory becomes easier as unnecessary data is reduced.

As shown in Fig. 2, one bit data of NON DISPLAY FLAG is provided at the last of each entry data of the electronic telephone directory. Content corresponding to an ENTRY NUMBER may be displayed on the display unit 20 in accordance with the NON DISPLAY FLAG, that is, the content may be displayed when the NON DISPLAY FLAG is "off" and the content may not be displayed when the NON DISPLAY FLAG is "on". In such a configuration, the NON DISPLAY FLAG of the appropriate entry may be set to "on" instead of actually deleting the entry data from the electronic telephone directory in the deletion process shown in Fig. 12.

In such a configuration, the entry data is not deleted from the electronic telephone directory and content of an entry whose NON DISPLAY FLAG is "on" is just not displayed on the display unit 20. Accordingly, even when instruction for deletion of entry data is performed by mistake, the content can be displayed by setting the NON DISPLAY FLAG to "off'.

## Claims

1. An electronic telephone directory comprising:
a data storage for storing entry data of an entry registered in the electronic telephone directory, said entry data including an entry identifier for identifying the entry, an entry name, a telephone number, and a link identifier indicative of an entry identifier included in entry data of another entry registered in the electronic telephone directory; and
a display controller for displaying a first entry name included in first entry data of a first entry registered in the electronic telephone directory and a second entry name included in second entry data of a second entry identified by a link identifier included in the first entry data, said second entry name being displayed in association with the first entry name.

2. The electronic telephone directory of claim 1, wherein
said entry data further includes a flag for indicating whether to display the second entry name, and
said display controller displays the second entry name only when the flag indicates to display the second entry name.

3. The electronic telephone directory of claim 1, or 2, wherein
said entry data includes a plurality of link identifiers.

4. The electronic telephone directory of claim 1, 2, or 3, the entry data including number of incoming or outgoing telephone calls during a predetermined time period, said electronic telephone directory further comprising:
a selector for determining a candidate entry to be deleted from among entries registered in the electronic telephone directory on the basis of number of link identifiers and the number of incoming or outgoing telephone calls included in entry data of each entry; and
a deleter for deleting entry data of the candidate entry from the data storage.

5. The electronic telephone directory of claim 1, 2, or 3, the entry data including number of incoming or outgoing telephone calls during a predetermined time period, said electronic telephone directory further comprising:
a selector for determining a candidate entry to be deleted from among entries registered in the electronic telephone directory on the basis of number of link identifiers and the number of incoming or outgoing telephone calls included in entry data of each entry, wherein
said display controller displays entry names included in entry data of entries except for the candidate entry.

6. The electronic telephone directory of claim 4, wherein
said entry data further includes a mail address and number of incoming or outgoing mails during a predetermined time period, and
said selector determines the candidate entry on the basis of number of link identifiers, the number of incoming or outgoing telephone calls, and the number of incoming or outgoing mails included in entry data of each entry.

7. The electronic telephone directory of any preceding claim, wherein
said display controller allows scrolling of display image.

8. The electronic telephone directory of claim 7, wherein
said display controller allows scrolling of display image while freezing a part of the display image.

9. A telephone directory management method executed by an electronic telephone directory including a data storage for storing entry data of an entry registered in the electronic telephone directory, said telephone directory management method comprising the steps of:
storing entry data including an entry identifier for identifying an entry, an entry name, a telephone number, and a link identifier indicative of an entry identifier included in entry data of another entry registered in the electronic telephone directory; and
displaying a first entry name included in first entry data of a first entry registered in the electronic telephone directory and a second entry name included in second entry data of a second entry identified by a link identifier included in the first entry data, said second entry name being displayed in association with the first entry name.
